# EUROPEAN PATENT APPLICATION

(11) **EP 2 315 168 A1**
(43) Date of publication of application: **27.04.2011**
(21) Application number: 09382188.2
(22) Date of filing: 01.10.2009
(51) Int. Cl.: G06Q 10/00

(54) **System for the management of mobile professionals**

(71) Applicant: Detector de Seguimiento y Transmision, S.A., 28108 Alcobendas Madrid (ES)
(72) Inventor: Sen Jimenez, Juan Manuel, 28108 Alcobendas-Madrid (ES)
(74) Representative: Mato Adrover, Ángel Luis

(57) **Abstract**

The invention relates to a system for the management of mobile professionals which is installed in mobile telephones so that the professional user can hit each of the actions occurring during his workday, through a process comprising information architecture and infrastructure of the system; basic data of the system; mobile terminal data update; the mobile application operation; positioning control; forms for visits or jobs at clients or points of interest and data access, made up of a set of external mobile telephones equipped with GPS which emit via GPRS information on their location to a fleet management server, to a central unit with the integral management database and also specific software.

## Description

### Object of the Invention

According to the title, the invention proposes a system for the management of mobile professionals consisting of a software application which is also object of this invention installed in mobile telephones so that the professional user can note each and every action occurring during his workday, from the time it starts until it ends, including the necessary breaks (lunch, unexpected events...) and the different merely professional activities (visiting clients, traveling times).

Most of the recorded actions are automatic (traveling times, break times, visit times, visit locations) since the mobile device, which must have a GPS receiver, captures positions (coordinates) and times to automatically calculate the durations between events.

Every event is started by the professional, selecting it from a mobile application menu, with the exception of traveling events, which the device is able to identify by analyzing the rate of change of the GPS coordinates.

Furthermore, the system incorporates a report module (to reduce the time the professional uses for professional tasks) such that after ending each event, the corresponding report can be completed so that it can be recorded.

This information (both that of the reports and that of the times and positions of the events), is transmitted via GPRS to a central system which stores and processes the information so that it can be consulted by means of a consult application, and information about the effective time of a professional and the distribution thereof according to the type of events (visits, meetings, breaks, travel...) can be obtained. This analysis provides a measurement of a professional's productivity without the professional having to justify any of the actions by means of subsequent reports or at the end of the day (which reduces productive time).

The foregoing is supported by software which generally, and in summary, is based on a service module (service applications) which, on one hand, interacts with elements characteristic of the mobile telephone, and on the other consists of several sub-modules or specialized routines for the remaining activities of the system according to the invention, and furthermore comprises a control module and other additional ones for various tasks for the performance of the tools.

In summary, it is a system or method for recording and controlling the activities of professionals who do not usually have physical or direct supervision.

### Background of the Invention

No system is recorded or is known which contemplates the possibility of being able to control the type of activities described in the previous section with an automatic telephone-computer system since the control of these mobility activities of external professionals has been done in several ways, the most elementary being by means of written leads, controller verifications, by means of inspection follow-up, checking through strategic controls, and more recently by means of personal telephone communication.

### Description of the Invention

The system of the invention comprises the following aspects: the information architecture and infrastructure of the system; basic data of the system; mobile terminal data update; the mobile application operation; positioning control; forms for visits or jobs at clients or points of interest and data access, as well as a specific software for the computerized processing of all of it.

First, the information architecture and infrastructure of the system (shown in the drawings) has its starting point in redundant systems for the location, tracking and recovery of vehicles of the same applicant from where, according to a pre-established format (for example, an Excel file or the like), the initial data will be loaded in the commercial control system (system users, client listing or points of interest with their corresponding coordinates). This data will subsequently be downloaded in the mobile terminals of the system from where the professionals will report their data.

On one hand, information relating to location and, on the other, professional activity reporting information will be generated from the mobile terminals, the latter information being received in the communications servers and subsequently re-routed to a database (central unit) for being accessed by upper level users who handle the control of the professional's activity.

The latter users will access the information through the local application developed for a computer and installed therein, where they can export data to a format (e.g., Excel) from where any statistic deemed appropriate can be performed.

A specific software application is applied for the processing of the foregoing. It is based on a service module (service applications) which, on one hand, interacts with elements characteristic of the mobile telephone (GPS and GPRS) to obtain positioning information and to establish information sending/reception communications.

The service applications module consists of several sub-modules or specialized routines for authenticating the user, managing the client database received from the central server, collecting all the activity reporting generated by the professional as well as for sending positioning information to external applications or elements installed or not in the mobile telephone (e.g., a navigator and a map service on which to represent the coordinates obtained in order to, using this information, calculate navigation routes or to graphically represent the position or positions returned by the GPS to the service application.

A control module is furthermore included for disconnecting the GPS and additional modules when they are not necessary for the purpose of increasing the autonomy of the battery of the mobile telephone in which the application resides.

Second, the basic data of the system contemplates that the mobile terminals, the work areas of the professionals and the professionals themselves will be managed from simple forms for the registration, cancellation and modification of information. In turn, the section for the client listing or points of interest will be managed from a somewhat more complete environment including:
- The possibility of importing the data from an external file such that it can be obtained from a third system or imported.
- The possibility of automatically georeferencing imported clients or points of interest, preventing having to position them in the plane one by one.
- For those which could not be automatically referenced (since their correct address from an official point of view is not available), their coordinates could be entered manually.
- The possibility of performing searches by the basic data of the clients or points of interest.
- Advanced searches will be implemented.

Furthermore, data relating to their periodic forecasts (e.g., monthly, quarterly, yearly sales, incidences handled...) can be loaded for each client or points of interest. This loading will be through importing or it can be done through registrations, cancellations or modifications.

Three, two types of updates for each mobile terminal will be used in the mobile terminal data update: a complete update and a partial update. The complete data update will be done from the form which defines such updates, being able to create a new database file, which must be loaded manually in a specific one of the mobile device (or by connecting it to a computer or sending it by mail, which the user saves in the mentioned file).

When this occurs, the PDA will request a restart and when this is done, the application will regenerate the database.

The partial update will cause data of the different terminals to be sent as such data is being modified (if a client's data changes, for example, it is not necessary to update it all, rather just his data).

In this sense, it should be pointed out that for one and the same group of terminals (for example, terminals belonging to one and the same company), each terminal will provide service to each of the professionals using it, i.e., any user of the group who is registered in the access to the application can see his associated data independently of the mobile terminal in which he starts his workday.

Four, the mobile application operation is performed once the basic data is defined, and since such data is loaded in the PDA, the system will first be explained from a point of view of the process which the professionals must follow in their daily work. Each professional will have a mobile terminal and a user name and password to access an application for the management of mobile professionals.

The first step the professional must follow is to register himself in the application whenever he starts his workday. As long as he does not enter the application, the system will interpret that the professional is not working. Upon starting the session, it will be considered that there is a workday start (in order to control blocking, it will be taken into account that if a there is a workday that has not been closed upon entering, the same workday will be continued).

When exiting the application, the latter will ask the professional if he is sure and will indicate that he should hit end of workday. In any case, if the professional makes a mistake, he can start another workday for the same day. This should not be done under normal conditions but the system will not prevent it.

Once in the application, the professional may do several things:
- Hit start break in the workday (allowing him to add a generic motif, for example, food, and notes). After hitting start break, only end break may be hit at the end of such break.
- He may also access the client listing and search by area, province, city, etc. By selecting one he can execute a navigator application (e.g., TOMTOM) to go to him without needing to enter in the latter the client's address. In this selection, he could also hit start visit (which is described below).
- In the search for a client or point of interest defined in the previous point, the search for clients or points of interest closest to the current position could be selected.
- Finally, he will have the possibility of defining a specific point of interest with a name and a category (for example, new client). In this case, a professional will never be able to register a new client, rather he may only register points of interest which must subsequently be analyzed.

From the moment in which start workday is hit, the mobile terminal will begin to report its position against the location system following the guidelines described in the following section.

Five, positioning control is done from the moment in which start workday is hit in the mobile terminal, and until said workday ends, the mobile terminal will function like a location device reporting its position to the central fleet management service every few minutes. An indicator of the GPS status for information on the professional is incorporated in the mobile terminal application interface.

In addition to sending position and speed to the central service, the location means in the mobile terminal will be used for:
- Calculating the time and the total kilometers traveled during the day.
- Calculating the lost times (considering the latter to be times in which the professional is stopped for more than "X" minutes without having established a break or a visit).
- Allowing performing a search for clients or points of interest close to the current position of the professional.
- Allowing controlling that a start workday corresponds with the movement of the professional (at least after a certain number of minutes).
- Allowing controlling that the visits are reported from the location of the clients or points of interest.

This information will be attached to the professional's reports drawn up from the mobile terminal. Additionally, the movement and trips of each of the professionals while the workday is open in the mobile terminal can be analyzed from the web positioning application.

Six, the forms for visits or jobs at clients or points of interest are updated. Within a workday, the professional can hit in his mobile terminal the possibility of making a visit or performing a job. To do this, he will select the client or point of interest (after a search as specified above) and will hit "start activity", selecting from a pull-down menu the type of activity (e.g., visit, job, delivery of material...), which must be configured from the central system and then downloaded towards the corresponding terminal or group of terminals.

When "start activity" is hit, the system will notify if the current location does not correspond with the recorded position of the client or point of interest (in any case it will allow the professional to make the visit, it will just notify him of the incident).

Once this is done, the professional can only hit "end activity", counting the intermediate time and forcing the user to reply to a personalized questionnaire. These forms can be assigned by groups of terminals, by single terminals... such that forms can be incorporated on demand and from the central server.

When the report is finished, it will be understood to be completed and will be sent to the central service. The professional can then access the information therein again but only to consult it, filling out the incident field if any mistake has been made.

Seven, the invention contemplates the data access such that the location information and the information generated by the commercial activity will be received in a communications server and will later be forwarded to a database of the central service, from where it could be operated with an application (the same application in which the basic data explained above is defined). This application will operate in client-server mode within the network of the central service.

The workday data of each professional can be accessed in this application, displaying in a grid or table:
Name or identifier of the professional
Start time
End time
Time of Workday
No. of Visits / Jobs...
Time of Visits / Jobs...
Traveling time
Distance traveled
Time for breaks
Time for unjustified break
System incident (this will be completed automatically if after the start of the session the professional has not moved or if there are two visits or jobs for the same client on that workday).

In principle, this grid will be loaded with all the data of the table or consult although the client could search about all the criteria thereof, filtering the results. In the end, the content of the grid (whether all the data or the result of a search) can be exported to a file for performing the statistics deemed appropriate.

In addition to the workdays, the visits made could be analyzed having as information associated thereto all those fields appearing in the customized form for each professional or group.

As defined above, searches by all the fields can be performed and the results of the grid can be exported to a file. Furthermore, in the case of the visits or jobs, one could be selected and a record thereof could be edited, displaying all its data (including photographs that may have been taken in the selected visit).

In the drawings:
Figure 1 is a perspective view of the architecture and infrastructure of the system.
Figure 2 is a schematic view of the block diagram of the system of the invention.
Figure 3 is a view of the diagram of the software application of the invention.

### Preferred Embodiment of the Invention

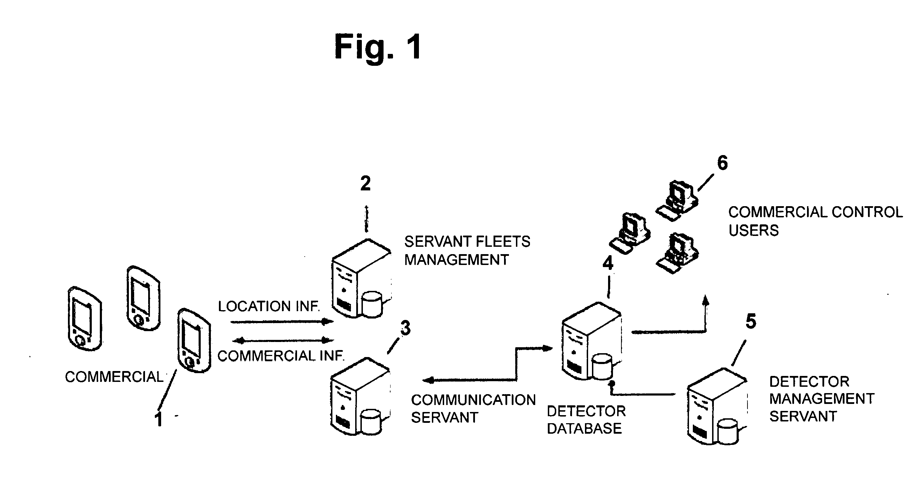

A preferred embodiment of the invention is contained in the structural development of Figure 1 which, according to the invention, comprises a set of external mobile telephones (1) equipped with GPS which emit information about their location to a fleet management server (2) and emit and receive commercial information to and from a communications server (3) via GPRS, which server is aided by a server (4) with the database of the central unit, which data is managed from another server (5) of said central unit, and finally processed by a family of user terminals (6) in which the commercial control of the professionals who have the mobiles (1) assigned to them is established.

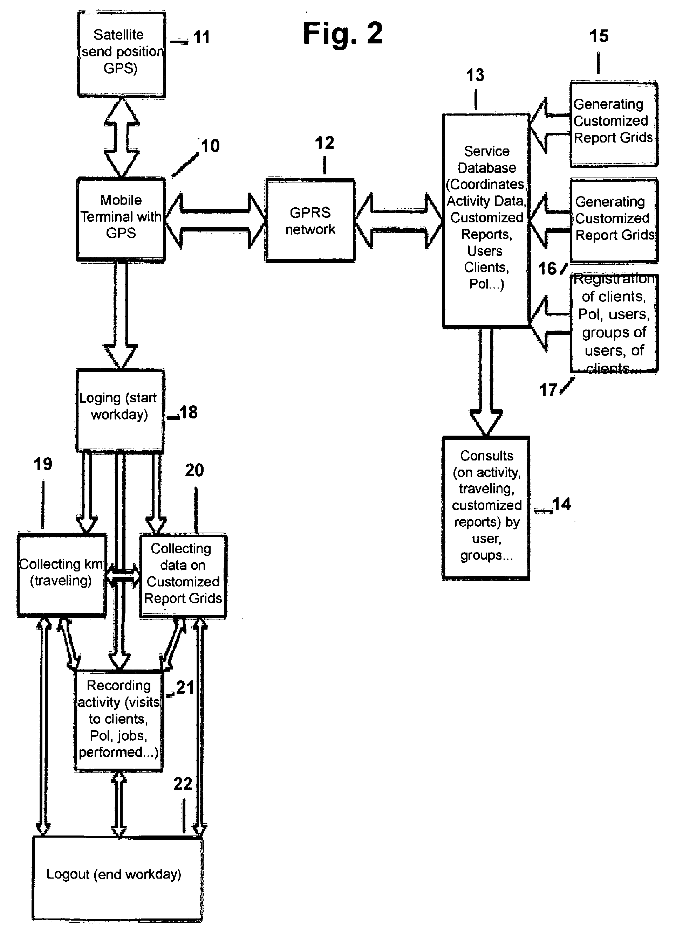

The operation of the system which is developed and schematically depicted in Figure 2 consists of a module (10) made up of the mobile equipment provided with GPS the position of which is located via satellite (11) communicating via GPRS (12) with the supporting information structure comprising: a database unit (13) for the activity data coordinates service; (customized reports, users, clients, and others), served by two or more modules (15) and (16) for generating grids, customized reports and another module (17) for the registrations of clients, zones, users, groups of users, of clients and the like. It is also communicated with another unit (14) for consults (about activity, travel, customized reports) by user, groups or the like. The communication of the mobile terminal with GPS (10) starts in the module (18) with login, collecting (start workday) data from the professionals from which three paths for the km collection units (traveling) (19) are projected, collection of data about customized report grids (20) and the registration of activity (21) (visits to clients, zones, jobs performed..) which are communicated among one another through respective connection paths and these with the final logout module (22) (end workday).

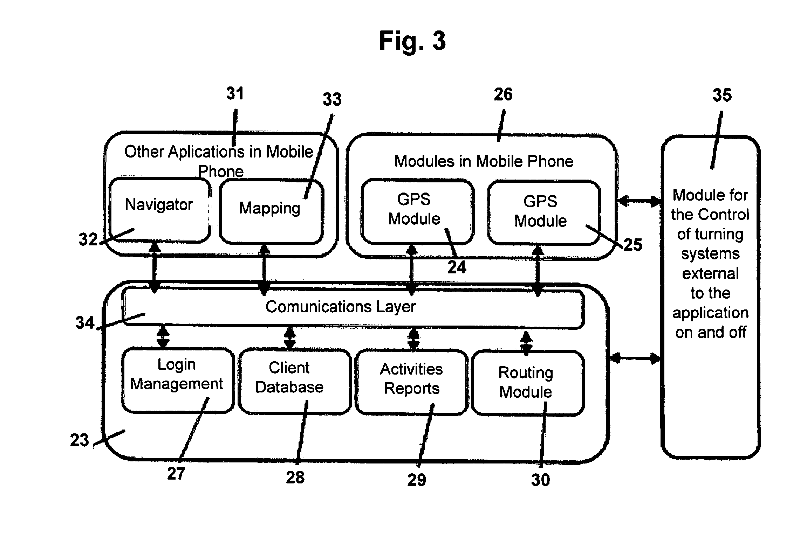

The software of the system shown in Figure 3 is based on a service module (service applications) (23) which, on one hand, interacts with elements characteristic of the mobile telephone (26) [(GPS (24) and GPRS (25)] to obtain positioning information and to establish information sending/reception communications.

The service applications module (23) consists of several sub-modules or specialized routines for authenticating the user (27), managing the client database (28) received from the central server, collecting all the activity reporting generated by the professional (29) as well as for sending positioning information (30) to external applications or elements installed or not in the mobile telephone (31) (e.g., a navigator (32) and a map service (33) on which to represent the coordinates obtained in order to, using this information, calculate navigation routes or to graphically represent the position or positions returned by the GPS (24) to the service application (23), all this aided by a communications manager (34).

A control module (35) is furthermore included for disconnecting the GPS and additional modules when they are not necessary for the purpose of increasing the autonomy of the battery of the mobile telephone in which the application resides.

## Claims

1. A system for the management of mobile professionals which is installed in mobile telephones so that the professional user can hit each of the actions occurring during his workday, **characterized by** comprising the information architecture and infrastructure of the system; basic data of the system; mobile terminal data update; the mobile application operation; positioning control; forms for visits or jobs at clients or points of interest and data access, made up of a set of external mobile telephones (1) equipped with GPS which emit via GPRS information on their location to a fleet management server (2) and emit and receive commercial information to and from a communications server (3) via GPRS, which server is aided by a server (4) with the database of the central unit, which are managed from another server (5) of said central unit and finally processed by a family of user terminals (6) in which the commercial control of the professionals having the mobiles (1) assigned to them is established, all with the aid of specific software centralized in a service applications station (23).

2. A system for the management of mobile professionals according to the previous claim, the operation of which is **characterized in that** it consists of a module (10) made up of the mobile equipment (1) provided with GPS the position of which is located via satellite (11), communicating via GPRS (12) with the supporting information structure comprising: a database unit (13) for activity data coordinates service (customized reports, users, clients, and the like), served by two or more modules (15) and (16) for generating grids (customized reports) and another module (17) for registering clients (zones, users, groups of users, of clients and the like), and also communicated with another unit (14) for consults (about activity, travel, customized reports by user, groups or the like), such that the communication of the mobile terminal module (10) with GPS (1) starts in module (18) with login, collecting (start workday of the professionals) data from which three paths for km collection units (traveling) (19) are projected, collection of data about (customized report) grids (20) and the registration of activity (21) (visits to clients, zones, jobs performed...) which are communicated among one another through respective connection paths and these with the final logout module (22) (end workday).

3. A system for the management of mobile professionals according to claim 1, wherein the services applications station (23) is **characterized by** comprising several sub-modules or specialized routines for authenticating the user (27), managing the client database (28), collecting all the activity reporting generated by the professional (29) as well as for sending positioning information (30) to external applications or elements installed or not in the mobile telephone (31), e.g., a navigator (32) and a map service (33); all this aided by a communications manager (34).

4. A system for the management of mobile professionals according to claim 3, wherein the service applications station (23) is **characterized in that** it furthermore comprises a control module (35) for disconnecting the GPS and additional modules when such GPS are not necessary.
